# EUROPÄISCHE PATENTSCHRIFT

(11) **EP 2 207 610 B1**
(45) Veröffentlichungstag und Bekanntmachung des Hinweises auf die Patenterteilung: **05.04.2017**
(21) Anmeldenummer: 08848544.6
(22) Anmeldetag: 07.11.2008
(51) Int. Cl.: B01D 35/153, B01D 35/147, B01D 35/16

(54) **FLÜSSIGKEITSFILTER**
LIQUID FILTER
FILTRE À LIQUIDES

(30) Priorität: 09.11.2007 DE 102007053872
(43) Veröffentlichungstag der Anmeldung: 21.07.2010
(73) Patentinhaber: Mann + Hummel GmbH, 71638 Ludwigsburg (DE)
(72) Erfinder: JAINEK, Herbert, 74074 Heilbronn (DE)
(74) Vertreter: Seyboth, Matthias
(86) Internationale Anmeldenummer: PCT/EP2008/065142
(87) Internationale Veröffentlichungsnummer: WO 2009/060072

(56) Entgegenhaltungen:
- DE-A1-102006 029 107
- DE-U1-202005 012 435
- US-A- 3 231 089
- US-B1- 6 936 162

## Beschreibung

### Technisches Gebiet

Die Erfindung betrifft ein einen Flüssigkeitsfilter, insbesondere für Öl oder Kraftstoff von Brennkraftmaschinen nach dem Oberbegriff des Anspruchs 1.

### Stand der Technik

Gemäß WO 2007/003517 A2 werden Filterelemente für die Flüssigfiltration von viskosen Medien wie Öl oder Kraftstoff in herkömmlicher Weise aus plissierten Filtermedien vorzugsweise in zylindrischer Form hergestellt. Diese Filterelemente können dabei metallfrei und mit einer Endscheiben aus Folie, Pappe, einem Kunststoff, z.B. PA, oder ähnlichem versehen sein. Es sind aber auch Ausführungen mit Metallendscheiben und einem Metallmittelrohr möglich. Die Falten der Filterelemente sind dabei oft in die Endscheiben eingebunden, zum Beispiel verklebt, verschweißt oder geschäumt und verbinden diese Elemente dann direkt.

Aus der DE 10 2006 029107 A1 ist ein Filtermodul bekannt, des ein Gehäuse, in dem ein Filterelement angeordnet ist, und einen Deckel aufweist. Das Filterelement hat an seiner unteren Endscheibe einen Funktionsträger, an dem eine Rücklaufsperrmembran befestigt ist, die einerseits ein Leerlaufen des Filters im Stillstand verhindert und andererseits die Rein-Roh-Abdichtung ermöglicht, weshalb die Rücklaufsperrmembran als Formdichtung mit mehreren Dichtbereichen ausgebildet ist.

Ferner sind die US 3 231 089 A und US 6 936 162 B1 zu nennen, die jeweils Blech-Spin-On-Filter betreffen, die über eine inneren Rücklaufsperrmembran verfügen, die nicht zu einer Rein-Roh-Abdichtung dient, sondern ein Auslaufen im Servicefall verhindern kann.

Schließlich betrifft die DE 20 2005 012435 U1 ein Filtermodul, dessen Filterelement eine Rücklaufsperrmembran hat, die einen zweiten radial innen liegenden Dichtbereich hat, der durch ein Schnabelventil ausgebildet ist, durch das auch ein Verschluss der Reinseite im Servicefall ermöglicht wird.

Zur Vermeidung des Leerlaufens des Filtergehäuses in Rohrichtung wird aber auch häufig ein in das Gehäuse dauerhaft eingebrachtes federbelastetes Ventil verwendet. Diese Rücklaufsperrventile werden in einem separaten Montageschritt in das Gehäuse eingesetzt. Die Rücklaufsperrventile bestehen üblicherweise aus einem Ventilteller, der mit einer Feder vorgespannt ist, einer Ventilkrone und einem Ventilsitz. Das Ventil wird in das Gehäuse eingeklebt, eingeschraubt oder eingepresst, wobei es in der Regel nachteilig ist, dass dieses Bauelement aufwendig zu montieren ist.

Der Erfindung liegt die Aufgabe zugrunde, einen Flüssigkeitsfilter zu schaffen, welche einfach montierbar und kostengünstig herstellbar sind. Diese Aufgabe wird durch den Gegenstand des Anspruchs 1 gelöst.

### Offenbarung der Erfindung

Der erfindungsgemäße Flüssigkeitsfilter weist ein Filterelement und ein öffenbares Filtergehäuse mit einer Einlassöffnung für die zu reinigende Flüssigkeit, eine Auslassöffnung für die gereinigte Flüssigkeit und eine Ablauföffnung für den drucklosen Ablauf der in dem Filtergehäuse enthaltenen Flüssigkeit, um Austreten von Flüssigkeit beim Filterelementwechsel zu verhindern. Das Filterelement ist axial in das Filtergehäuse einsetzbar. Das Filterelement hat ein ringförmig geschlossenes Filtermedium, das stirnseitig mit einer oberen Endscheibe und einer unteren Endscheibe verbunden ist und weist eine Rücklaufsperrmembran auf. Die Rücklaufsperrmembran ist derart angeordnet, dass sie in dem Filtergehäuse die Einlassöffnung überdeckt und eine zusätzliche Dichtkontur aufweist, durch welche im Filtergehäuse die Rohseite von der Reinseite abdichtbar ist. Darüber hinaus verfügt die Rücklaufsperrmembran noch über eine zusätzliche Dichtfläche. An der unteren Endscheibe ist ein nach unten abstehender, durchgängiger ringförmiger Absatz angeordnet, an den die Rücklaufsperrmembran angespritzt ist. Die zusätzliche Dichtfläche ist dabei an einer Stirnseite des ringförmigen Absatzes als Axialdichtfläche und Ringfläche ausgebildet. Mit der zusätzlichen Dichtfläche ist die Ablauföffnung verschließbar, wobei sich diese auf einer Dichtfläche des Filtergehäuses dichtend abstützt. Das Filterelement verfügt über ein ringförmig geschlossenes Filtermedium, welches aus bahnförmigem Papier oder Vlies gefaltet oder gewickelt ausgeführt ist. Weiterhin kann das Filtermedium auch aus einem blockförmig gepressten Material gebildet werden. Stirnseitig ist das Filtermedium mit einer oberen Endscheibe und einer unteren Endscheibe dichtend verbunden. Diese Verbindung, welche unlösbar ausgeführt ist, kann z.B. durch Schweißen Kleben oder Einschäumen erzeugt werden. An einer dieser Endscheiben ist eine Rücklaufsperrmembran angeordnet, welche aus einem flüssigkeitsdichten, elastischen, für die zu filternde Flüssigkeit resistenten Material, insbesondere Elastomere wie z.B. Propylen-Tetrafluorethylen-Kautschuk (FPM), hydrierten Nitril-Butadien-Kautschuk (HNBR), Acrylat- Kautschuk (ACM), besteht. Hierbei ist die Rücklaufsperrmembran derart ausgeführt, dass sie eine Einlassöffnung in dem Filtergehäuse überdeckt, wobei die Rücklaufsperrmembran durch den zu reinigenden Flüssigkeitsstrom abgehoben wird. Die Rücklaufsperrmembran verfügt über eine Ringfläche, welche auf eine Ringfläche des Filtergehäuses aufsetzt. Beim nicht durchströmten Flüssigkeitsfilter verschließt die aufgesetzte Ringfläche der Rücklaufsperrmembran die Einlassöffnung so, dass keine Flüssigkeit aus dem Filtergehäuse zurückströmen und das Filtergehäuse leerlaufen kann. Dies ist vorteilhaft, da bei einem Neustart des Filtrationsvorgangs das Gehäuse bereits gefüllt ist und nicht erst gefüllt werden muss, um z.B. beim Neustart der Brennkraftmaschine den erforderlichen Öldruck schnell aufzubauen. Somit steht gereinigte Flüssigkeit wesentlich schneller zur Verfügung.

Die Rücklaufsperrmembran ist erfindungsgemäß derart ausgeführt, dass sie eine Abdichtung zwischen einer Rohseite und einer Reinseite bewirkt. Hierzu weist die Rücklaufsperrmembran Dichtkonturen auf, welche im Filtergehäuse eine dichtende Trennung zwischen der Rohseite und der Reinseite bilden. Diese Dichtkonturen sind als radial nach innen weisende Wulste ausgeführt, welche sich radial an einem den Reinauslass bildenden Rohr abstützen. In einer nicht erfindungsgemäßen Ausführungsform kann die Dichtkontur der Rücklaufsperrmembran auch axial dichtend ausgeführt und auf einer ringförmigen Auflagefläche abgestützt sein.

Die Rücklaufsperrmembran erfüllt die Funktion der Rücklaufsperre für die Einlassöffnung. Als weitere Funktion dichtet die Rücklaufsperrmembran mit einer zusätzlichen Dichtfläche die Ablauföffnung ab. Somit sind mehrere Funktionen, insbesondere Dichtfunktionen, in ein einziges Bauteil integriert. Die Rücklaufsperrmembran ist einfach herstellbar und einfach montierbar. Da die Dichtfunktion direkt an der Rücklaufsperrmembran, welche mit dem Filterelement verbunden ist, angeordnet ist, entfallen zusätzliche Montagearbeitsgänge, wie sie bei federbelasteten gesondert montierten Absperrventilen erforderlich sind. Weiterhin können teure Ventile durch Integration der Dichtfunktion in die Rücklaufsperrmembran eingespart werden.

Um einen vollständigen Leerlauf des Filtergehäuses zu gewährleisten, ist es vorteilhaft, die Ablauföffnung an einem Tiefpunkt in dem Filtergehäuse anzuordnen.

Die Rücklaufsperrmembran des erfindungsgemäßen Filters verfügt über eine zusätzliche Dichtfläche, welche als weitere Funktion eine in dem Filtergehäuse angeordnete Ablauföffnung verschließt. Diese Ablauföffnung ist für das Leerlaufen des Filtergehäuses vorgesehen, wenn das Filterelement gewechselt werden muss. Durch die Anordnung der Dichtfläche an der Rücklaufsperrmembran wird der Verschluss der Ablauföffnung bei der Montage des Filterelementes ohne zusätzlichen Arbeitsschritt erzeugt. Ein weiterer Vorteil besteht darin, dass keine zusätzlichen Bauteile erforderlich sind und die Anformung der Dichtfläche an die bestehende Rücklaufsperrmembran ohne zusätzliches Material somit kostengünstig ist.

Die zusätzliche Dichtfläche ist als Axialdichtfläche ausgebildet. Bei der Ausbildung als Axialdichtfläche, ist im Bereich der Ablauföffnung ein plan ausgebildeter Boden des Filtergehäuses ausreichend, um eine zuverlässige axiale Abdichtung zu erzeugen. Hierbei wird die Axialdichtfläche lediglich auf diesen Bereich axial aufgesetzt. In einer nicht erfindungsgemäßen Ausgestaltung kann die Axialdichtfläche als Segment ausgeführt sein, welches im Querschnitt etwas größer als die Ablauföffnung ausgeführt sein muss um diese vollständig dichtend abdecken zu können. Durch eine gewisse Vorspannung, welche z.B. mit Spiralfedern auf das Filterelement übertragen wird, ist eine zuverlässige Abdichtung erreichbar.
Die zusätzliche Dichtfläche ist als Ringfläche ausgeführt. Somit kann das Filterelement in jeder beliebigen radialen Position in das Filtergehäuse eingesetzt werden. Zusätzlich zu der Axialbewegung beim Einsetzen in das Filtergehäuse, kann das Filterelement eine Drehbewegung ausführen, ohne dass die Gefahr einer Undichtheit im Bereich der Ablauföffnung besteht. Somit ist die Montage im Verhältnis zu einer segmentiert ausgeführten Dichtfläche wesentlich vereinfacht.

Die Rücklaufsperrmembran ist an die untere Endscheibe angespritzt, sodass sämtliche Dichtflächen in Urformtechnik erzeugt werden. Dies ist eine schnelle und kostengünstige Möglichkeit die Rücklaufsperrmembran herzustellen. Weiterhin ist kein Montagearbeitsgang erforderlich. Ein weiterer Vorteil ist, dass die Rücklaufsperrmembran dichtend und unlösbar mit der Endscheibe verbunden ist und somit Leckagen zwischen der Endscheibe oder ein unbeabsichtigtes Lösen von der Endscheibe verhindert wird.

Bei einer nicht erfindungsgemäßen Ausgestaltung ist die Ablauföffnung in einer ringförmigen Nut angeordnet. Die zusätzliche Dichtfläche an der Rücklaufsperrmembran ist ebenfalls ringförmig ausgestaltet und kann in die Nut dichtend eingeschoben werden. Hierbei kann die Dichtfläche als Radialdichtung ausgebildet sein. Somit kann das Filterelement beliebig gedreht in das Filtergehäuse eingesetzt werden. Die Radialdichtung bildet hierbei eine zusätzliche Positionierhilfe in radialer Richtung.

Es ist vorteilhaft, dass das Filtergehäuse über eine Anlageschulter zur axialen Positionierung des Filterelements verfügt. Diese Anlageschulter kann als radial umlaufende oder partiell am Umfang verteilt angeordnete Kante ausgeführt sein. Hierbei verfügt das Filterelement an seiner unteren Endscheibe über eine entsprechende Korrespondenzkontur, welche sich an dieser Kante abstützt. Bei einer umlaufenden Kante im Filtergehäuse ist die Korrespondenzkontur als segmentiert ausgeführt. Bei einer partiell am Umfang verteilt angeordneten Kante ist die Korrespondenzkontur durchgängig ausgeführt. Somit ist eine zuverlässige Positionierung in axialer Richtung ohne große Toleranzschwankungen möglich.

Gemäß einer vorteilhaften Ausführung ist ein Spannmittel, wie z. B. Spiralfedern, Spannbügel oder angespritzte Lamellen, vorgesehen, mit welchem die zusätzliche Dichtfläche der Rücklaufsperrmembran auf die Ablauföffnung drückbar ist. Somit kann die Dichtfläche auch bei Vibrationen nicht von der Ablauföffnung abheben. Ein unbeabsichtigtes Ablaufen der Flüssigkeit wird somit verhindert.

### Kurze Beschreibung der Zeichnungen

Die Erfindung wird nachfolgend anhand von Ausführungsbeispielen näher erläutert. Hierbei zeigt:
Figur 1 einen nicht erfindungsgemäßen Flüssigkeitsfilter im Schnitt,
Figur 2 einen Ausschnitt des Flüssigkeitsfilters in einer erfindungsgemäßen Ausgestaltung,
Figur 3 eine alternative Ausgestaltung eines Flüssigkeitsfilters im Schnitt (nicht erfindungsgemäß),
Figur 4 einen variierten Ausschnitt des Flüssigkeitsfilters gemäß Figur 3 (nicht erfindungsgemäß) und
Figur 5 eine Draufsicht auf das Filtergehäuse gemäß Figur 4.

### Ausführungsform(en) der Erfindung

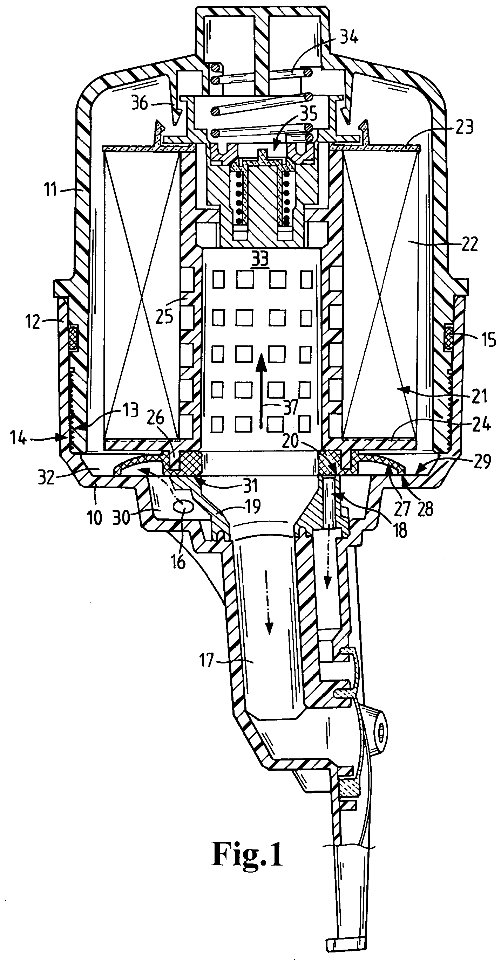

In Figur 1 ist ein nicht erfindungsgemäßer Flüssigkeitsfilter im Schnitt dargestellt. Der Flüssigkeitsfilter verfügt über ein Gehäuseunterteil 10 und ein Gehäuseoberteil 11. Die Gehäuseteile 10, 11 bestehen aus einem thermoplastischen Kunststoff, wie z.B. Polyamid (PA) oder Polypropylen (PP), wobei sie vorteilhafter- weise in Spritzgusstechnik hergestellt sind. Alternativ können die Gehäuseteile 10, 11 auch in Aluminium-Druckguss hergestellt sein. Materialkombinationen, bei welchem ein Gehäuseteil 10 oder 11 aus Kunststoff besteht und das andere Gehäuseteil 10 oder 11 aus Metall ist ebenfalls möglich. Das Gehäuseunterteil 10 weist einen nach oben offenen Topf 12 auf, welcher an seiner Innenwand über ein Innengewinde 13 verfügt. In dieses Innengewinde 13 greift ein Außengewinde 14 des Gehäuseoberteils 11, wodurch die Gehäuseteile 10, 11 lösbar miteinander verbunden sind. Zur Abdichtung zwischen den Gehäuseteilen 10, 11 ist ein O-Ring 15 vorgesehen. Im Inneren des Gehäuseunterteils 10 sind eine Einlassöffnung 16, eine Auslassöffnung 17 und eine Ablauföffnung 18 angeordnet. Hierbei verfügt das Gehäuseunterteil 10 über einen Einsatz 19, welcher unlösbar und dichtend mit dem Gehäuseunterteil 10 verbunden ist. Durch den Einsatz 19 wird einerseits die Trennung zwischen den einzelnen Öffnungen 16, 17, 18 erreicht andererseits ist der Einsatz derart ausgebildet, dass eine Dichtfläche 20 für ein in dem Gehäuse 10, 11 angeordnetes Filterelement 21 gebildet ist. Bei anderen Ausgestaltungen kann auf den Einsatz 19 verzichtet werden und dessen Geometrien an das Gehäuseunterteil 10 angeformt werden.

Das Filterelement 21 verfügt über ein zick-zack-förmig gefaltetes und ringförmig geschlossenes Filtermedium 22. An seinen Stirnseiten ist das Filtermedium 22 mit einer oberen Endscheibe 23 und einer unteren Endscheibe 24 durch eine Verklebung dichtend verbunden. Die unteren Endscheibe 24 ist einstückig mit einem, das Filtermedium 22 stützendes Mittelrohr 25 ausgeführt, welches für die zu reinigende Flüssigkeit durchlässig ist. An der unteren Endscheibe 23 ist ein nach unten abstehender, durchgängiger ringförmiger Absatz 26 angeordnet, an welchen eine Rücklaufsperrmembran 27 angespritzt ist. Die Rücklaufsperrmembran 27 weist einen umlaufenden Dichtrand 28 auf, welcher sich auf einer Fläche 29 des Gehäuseunterteils 10 abstützt. Die Fläche 29 umgibt einen Ringraum 30, in welchen die Einlassöffnung 16 mündet und von dem Einsatz 19 nach innen begrenzt wird. Weiterhin verfügt die Rücklaufsperrmembran 27 über eine Axialdichtfläche 31, welche sich auf der Dichtfläche 20 dichtend abstützt. Dadurch erfolgt eine dichtende Trennung zwischen einer Rohseite 32 und einer Reinseite 33. Die Rohseite 32 ist zwischen dem Filterelement 21 und den mit der Einlassöffnung 16 in Verbindung stehenden Gehäuseteilen 10, 11 gebildet. Die Reinseite 33 ist von dem Filterelement 21 umschlossen und kommuniziert mit der Auslassöffnung 17 für die gereinigte Flüssigkeit. Als dritte Funktion dichtet die Rücklaufsperrmembran 27 die Ablauföffnung 18 axial ab. Um einen ausreichenden Anpressdruck der Axialdichtfläche 31 auf der Dichtfläche 20 zu erzeugen, ist eine Spiralfeder 34 vorgesehen, welche zwischen dem Gehäuseoberteil 11 und der oberen Endscheibe 23 des Filterelements 21 verspannt ist. Somit ist ein unbeabsichtigtes Abheben der Axialdichtfläche 31 verhindert.

Durch verschmutzte Filtermedien oder zu niederviskose Flüssigkeiten, kann der Durchfluss durch das Filterelement 21 reduziert sein, wodurch der Differenzdruck zwischen der Rohseite 32 und der Reinseite 33 einen definierten Wert übersteigt. Das Filterelement 21 verfügt über ein Umgehungsventil 35, welches ab einem definierten Differenzdruck öffnet.

Im Normalbetrieb des Flüssigkeitsfilters strömt die zu reinigende Flüssigkeit durch die Einlassöffnung 16 in den Ringraum 30 des Filtergehäuses 10, 11 ein (strich-punktierter Pfeil) und hebt den Dichtrand 28 von der Fläche 29 ab. Die Flüssigkeit durchströmt das Filtermedium 22 von außen nach innen und tritt auch durch das Mittelrohr 25. Von der Reinseite 33 aus strömt die gereinigte Flüssigkeit durch die Auslassöffnung 17 aus dem Flüssigkeitsfilter hinaus (strich-punktierter Pfeil).

Im nicht durchströmten Zustand tritt keine Flüssigkeit durch die Einlassöffnung 16 ein. Der Dichtrand 28 liegt dichtend auf der Fläche 29 auf und verhindert so, dass Flüssigkeit von der Rohseite 32 zurück in die Einlassöffnung 16 fließt. Durch die Rücklaufsperrmembran 27 wird somit ein Leerlaufen des Filtergehäuses 10,11 verhindert, wodurch bei einem Neustart sofort Flüssigkeit zur Verfügung steht.

Um das Filterelement 21 auszutauschen, wird das Gehäuseoberteil 11 von dem Gehäuseunterteil 10 gelöst und axial nach oben abgehoben. Dadurch reduziert sich die Vorspannung der Spiralfeder 34 auf das Filterelement 21. Durch Schnapphaken 36 am Gehäuseoberteil 11 wird das Umgehungsventil 35 axial nach oben gezogen. Das Filterelement 21 ist mit dem Umgehungsventil 35 verschnappt, wodurch das Filterelement 21 ebenfalls axial nach oben gezogen wird. Durch diesen axialen Weg wird die Ablauföffnung 18 freigegeben und die im Filtergehäuse 10, 11 enthaltene Flüssigkeit kann drucklos ablaufen. Bis das Gehäuseoberteil 11 vollständig abgehoben ist, ist der Flüssigkeitsstand unter den Rand des Topfes 12 gesunken und es tritt keine Flüssigkeit aus. Das Filterelement 21 wird in Pfeilrichtung 37 axial aus dem Gehäuseunterteil 10 entfernt, die Verschnappung mit dem Umgehungsventil 35 gelöst, und das Filterelement 21 wird entsorgt. Ein neues Filterelement 21 wird vorzugsweise zuerst mit dem Umgehungsventil 35 verschnappt und anschließend entgegen der Pfeilrichtung 37 eingesetzt und durch das Aufsetzen und Verschrauben des Gehäuseoberteils 11 dichtend auf die Dichtfläche 20 gedrückt. Somit ist eine erneute Abdichtung der Rohseite 32 von der Reinseite 33 und die Abdichtung der Ablauföffnung 18 erreicht. Weiterhin ist der Ringraum 30 von der Rücklaufsperrmembran 27 überdeckt.

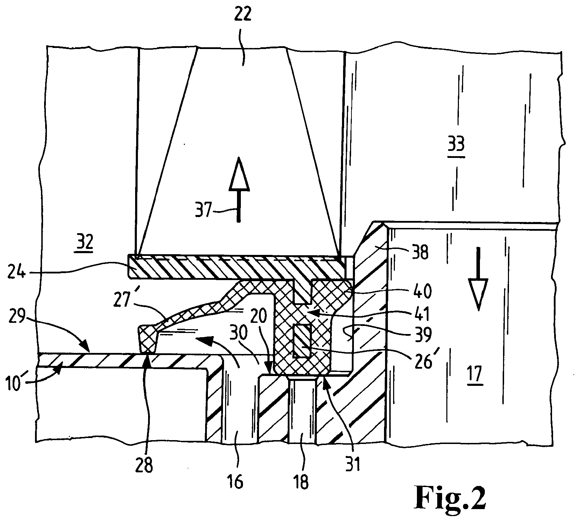

Figur 2 zeigt einen Ausschnitt des Flüssigkeitsfilters in der erfindungsgemäßen Ausgestaltung im Schnitt. Der Figur 1 entsprechende Bauteile sind mit gleichen Bezugszeichen versehen. Im Unterschied zu Figur 1 ist das Gehäuseunterteil 10' derart ausgebildet, dass alle Flächen und Konturen direkt angeformt sind und der Einsatz 19 gemäß Figur 1 entfällt. Die Auslassöffnung 17 ist in einem axial nach oben ragenden Dom 38 angeordnet. Dieser Dom 38 verfügt über eine Oberfläche 39, auf welcher ein Dichtwulst 40 dichtend anliegt und die Trennung zwischen der Rohseite 32 und der Reinseite 33 bewirkt. Diese Abdichtung ist durch eine radial wirkende Dichtung gebildet. Bei diesem Ausführungsbeispiel sind die drei Dicht-Funktionen der Rücklaufsperrmembran 27' auf drei räumlich voneinander getrennte Dichtbereiche verteilt. Somit ist die Dichtfunktion der übrigen Dichtstellen gesichert, falls eine Dichtstelle Leckagen aufweisen sollte. Ein weiterer Unterschied zu dem in Figur 1 dargestellten Ausführungsbeispiel besteht darin, dass der ringförmige Absatz 26' Unterbrechungen 41 aufweist, die mit Material der Rücklaufsperrmembran 27' ausgefüllt sind. Somit ist eine verbesserte Verbindung zwischen der Endscheibe 24 und der Rücklaufsperrmembran 27' erreicht, die größere mechanische Belastungen aufnehmen kann, wie sie z.B. beim Erzeugen bzw. Lösen der Radialdichtung zwischen dem Dichtwulst 40 und der Oberfläche 39 entstehen.

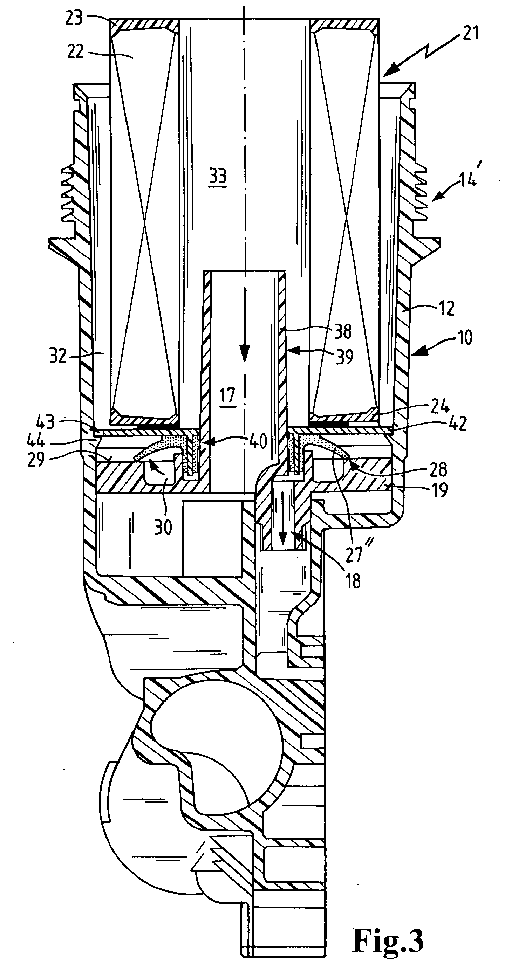

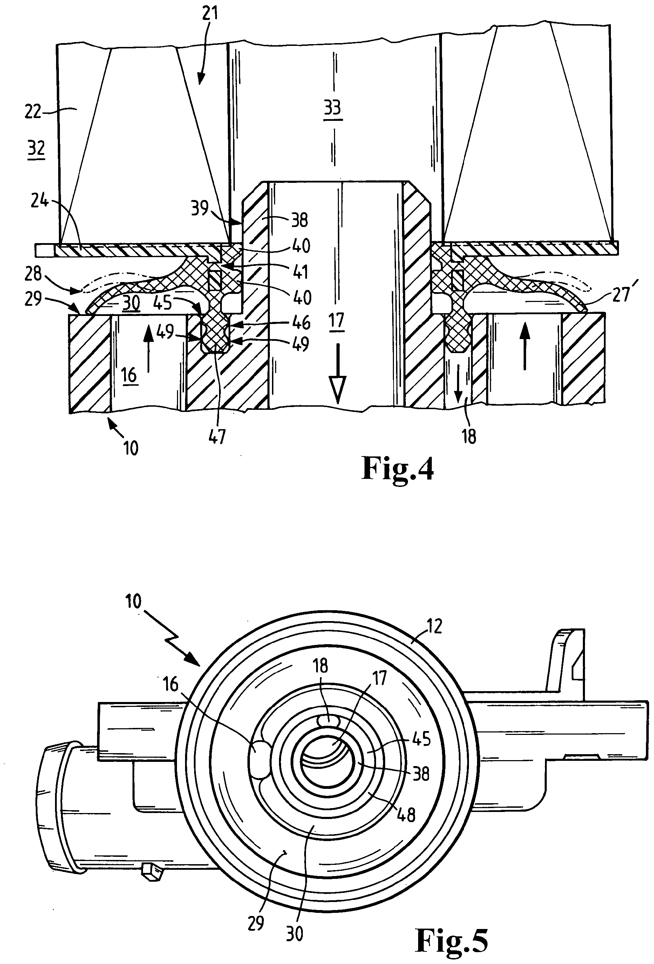

In Figur 3 ist eine nicht erfindungsgemäße Ausgestaltung eines Flüssigkeitsfilters mit radial wirkender Dichtfläche im Schnitt dargestellt. Den Figuren 1 oder 2 entsprechende Bauteile sind mit gleichen Bezugszeichen versehen. Im Unterschied zu den vorangehenden Figuren 1 und 2 weist das Filterelement 21 geschäumte Endscheiben 23, 24 auf, welche das Filtermedium 22 dichtend umschließen. An der unteren Endscheibe 24 ist eine Endplatte 42 aus thermoplastischem Kunststoff angeordnet, an welche die Rücklaufsperrmembran 27" angeformt ist. Die Rücklaufsperrmembran 27" weist neben der durch den Dichtrand 28 und die Fläche 29 gebildete, axial wirkende Dichtung, zwei radial wirkende Dichtungen für die Trennung der Rohseite 32 von der Reinseite 33, sowie für die Abdichtung der Ablauföffnung 18, auf. Dieses Dichtkonzept ist in Figur 4 vergrößert dargestellt.

Die Endplatte 42 weist an ihrem Umfang einen gezahnten Bereich 43 auf, welcher über umlaufend angeordnete Vertiefungen und Erhöhungen verfügt. Durch diesen gezahnten Bereich 43 kann sich die Endplatte 42 an einem Ringabsatz 44 abstützen, der in dem Gehäuseunterteil 10 angeordnet ist. Somit ist eine exakte axiale Lage des Filterelements 21 in dem Gehäuseunterteil 10 positionierbar, wodurch die Rücklaufsperrmembran 27" mit stets der gleichen Vorspannung auf die Fläche 29 gedrückt und eine Beschädigung durch zu starkes Andrücken verhindert wird. Diese Art der Positionierung unterliegt nur geringen Toleranzschwankungen, da die toleranzbehaftete axiale Länge des Filterelementes 21 für die Positionierung nicht benötigt wird. Die Strömungsrichtungen der zu reinigenden Flüssigkeit entsprechen den in Figur 1 beschriebenen Strömungsrichtungen. Unterschiedlich dazu ist lediglich. Dass die zu reinigende Flüssigkeit zwischen dem Ringabsatz 44 und den Vertiefungen des gezahnten Bereichs 43 hindurchströmt. Auch das Austauschen des Filterelementes 21 erfolgt, wie in Figur 1 und 2 beschrieben.

Figur 4 zeigt einen nicht erfindungsgemäßen variierten Ausschnitt des Flüssigkeitsfilters gemäß Figur 3 im Schnitt. Den Figuren 1 bis 3 entsprechende Bauteile sind mit gleichen Bezugszeichen versehen. Im Unterschied zu Figur 3 ist das Gehäuseunterteil 10 ohne Einsatz 19 ausgeführt. Das Gehäuseunterteil 10 weist eine Ringnut 45 auf, in welcher die Ablauföffnung 18 angeordnet ist. Zwischen den Seitenwänden der Ringnut 45 und Radialdichtflächen 49 ist eine Radialdichtung 46 erzeugt. Hierzu ragt ein ringförmig umlaufender bauchiger Dichtkragen 47 in die Ringnut 45. Im Unterschied zu Figur 3 ist die untere Endscheibe 24 aus formstabilem thermoplastischem Kunststoff gebildet, wobei die Funktionen der Endplatte 42 auf die untere Endscheibe 24 übertragen sind.

In Figur 5 ist eine Draufsicht auf das Filtergehäuse gemäß Figur 4 dargestellt. Der Figur 4 entsprechende Bauteile sind mit gleichen Bezugszeichen versehen. In dieser Darstellung ist der ringförmige Aufbau deutlich zu sehen. Die Auslassöffnung 17 ist zentral angeordnet und wird von dem Dom 38 umgeben. Daran anschließend ist die Ringnut 45 mit der Ablauföffnung 18 angeordnet. Die Ringnut 45 ist durch einen Ringsteg 48 von dem Ringraum 30 getrennt, wobei in dem Ringraum 30 die Einlassöffnung 16 angeordnet ist. Die Fläche 29 umschließt kreisringförmig den Ringraum 30. Durch die konzentrisch angeordneten Bereiche ist ein rotationssymmetrisches Filterelement 21 in jeder beliebigen radialen Lage einsetzbar.

## Patentansprüche

1. Flüssigkeitsfilter, aufweisend ein Filterelement (21) und ein öffenbares Filtergehäuse, wobei das Filtergehäuse (10,11) über eine Einlassöffnung (16) für die zu reinigende Flüssigkeit, eine Auslassöffnung (17) für die gereinigte Flüssigkeit und eine Ablauföffnung (18) für den drucklosen Ablauf der in dem Filtergehäuse enthaltenen Flüssigkeit, um Austreten von Flüssigkeit beim Filterelementwechsel zu verhindern, verfügt, wobei das Filterelement axial in das öffenbare Filtergehäuse (10,11) einführbar ist, wobei das Filterelement (21) ein ringförmig geschlossenes Filtermedium (22), welches stirnseitig mit einer oberen Endscheibe (23) und einer unteren Endscheibe (24) verbunden ist, und eine Rücklaufsperrmembran (27) aufweist, wobei die Rücklaufsperrmembran (27) derart angeordnet ist, dass sie in dem Filtergehäuse (10,11) einerseits die Einlassöffnung (16) überdeckt, wobei die Rücklaufsperrmembran (27) eine zusätzliche Dichtkontur (40) aufweist, durch welche im Filtergehäuse die Rohseite (32) von der Reinseite (33) abdichtbar ist, wobei die Rücklaufsperrmembran (27) über eine weitere zusätzliche Dichtfläche (31) verfügt, **dadurch gekennzeichnet, dass** an der unteren Endscheibe (23) ein nach unten abstehender, durchgängiger ringförmiger Absatz (26) angeordnet ist, an den die Rücklaufsperrmembran (27) angespritzt ist, wobei die zusätzliche Dichtfläche (31) an einer Stirnseite des ringförmigen Absatzes (26) als Axialdichtfläche und Ringfläche ausgebildet ist, mit welcher die Ablauföffnung (18) verschließbar ist, wobei sie sich auf einer Dichtfläche 20 des Filtergehäuses (10,11) dichtend abstützt, wobei die Querschnittsfläche der als Axialdichtfläche ausgebildeten zusätzlichen Dichtfläche (31) größer ist als ein Querschnitt der Ablauföffnung (18), wobei die Auslassöffnung (17) in einem axial nach oben ragenden Dom (38) angeordnet ist, wobei der Dom (38) über eine Oberfläche (39) verfügt, wobei die zusätzliche Dichtkontur (40) durch einen Dichtwulst (40) gebildet ist, der radial dichtend an dem Dom (38) anliegt und die Trennung zwischen der Rohseite (32) und der Reinseite (33) bewirkt, wobei der ringförmige Absatz (26') Unterbrechungen (41) aufweist, die mit Material der Rücklaufsperrmembran (27') ausgefüllt sind.

2. Flüssigkeitsfilter nach Anspruch 1, **dadurch gekennzeichnet, dass** die Ablauföffnung (18) an einem Tiefpunkt in dem Filtergehäuse (10,11) angeordnet ist.

3. Flüssigkeitsfilter nach einem der vorhergehenden Ansprüche, **dadurch gekennzeichnet, dass** das Filtergehäuse (10,11) über eine Anlageschulter (44) verfügt, welche zur axialen Positionierung des Filterelements (21) in dem Filtergehäuse (10,11) vorgesehen ist.

4. Flüssigkeitsfilter nach einem der vorhergehenden Ansprüche, **dadurch gekennzeichnet, dass** ein Spannmittel (34) vorgesehen ist, mit welchem die zusätzliche Dichtfläche (31, 49) der Rücklaufsperrmembran (27) auf die Ablauföffnung (18) drückbar ist.

## Claims

1. Liquid filter, featuring a filter element (21) and an openable filter housing, wherein the filter housing (10, 11) has an inlet opening (16) for the liquid to be cleaned, an outlet opening (17) for the cleaned liquid and a drain opening (18) for the pressureless drain of the liquid contained in the filter housing in order to avoid escaping of the liquid when changing the filter element, wherein the filter element is axially insertable into the openable filter housing (10, 11), wherein the filter element (21) features an annularly closed filter medium (22), which is connected on the front side with an upper end disk (23) and a lower end disk (24), and an anti-drain membrane (27), wherein the anti-drain membrane (27) is disposed in such a way that it covers in the filter housing (10, 11), on the one hand, the inlet opening (16), wherein the anti-drain membrane (27) features an additional sealing contour (40) by means of which the raw side (32) can be sealed against the clean side (33) in the filter housing, wherein the anti-drain membrane (27) has another additional sealing surface (31), **characterized in that** at the lower end disk (23) a continuous annular shoulder (26) protruding towards the bottom is disposed to which is injection molded the anti-drain membrane (27), wherein the additional sealing surface (31) is designed on one front side of the annular shoulder (26) as axial sealing surface and as annular surface with which the drain opening (18) is closable, wherein it is sealingly supported on a sealing surface (20) of the filter housing (10, 11), wherein the cross-sectional area of the additional sealing surface (31) designed as axial sealing surface is larger than a cross-section of the drain opening (18), wherein the outlet opening (17) is disposed in a dome (38) protruding axially towards the top, wherein the dome (38) has a surface (39), wherein the additional sealing contour (40) is formed by a sealing bead (40) which abuts radially sealingly against the dome (38) and causes the separation between the raw side (32) and the clean side (33), wherein the annular shoulder (26') features interruptions (41) which are filled with material of the anti-drain membrane (27'),

2. Liquid filter according to claim 1, **characterized in that** the drain opening (18) is disposed at a low point in the filter housing (10, 11).

3. Liquid filter according to one of the above claims, **characterized in that** the filter housing (10, 11) has an abutment shoulder (44) which is provided for an axial positioning of the filter element (21) in the filter housing (10, 11).

4. Liquid filter according to one of the above claims, **characterized in that** a clamping element (34) is provided by means of which the additional sealing surface (31, 49) of the anti-drain membrane (27) can be pressed onto the drain opening (18).

## Revendications

1. Filtre à liquide, présentant un élément filtrant (21) et un boîtier de filtre ouvrable, le boîtier de filtre (10, 11) étant doté d'une ouverture d'admission (16) pour le liquide à nettoyer, d'une ouverture de sortie (17) pour le liquide nettoyé et d'une ouverture d'écoulement (18) pour l'écoulement sans pression du liquide contenu dans le boîtier de filtre afin d'éviter la fuite de liquide lors de l'échange de l'élément filtrant, l'élément filtrant pouvant être introduit en sens axial dans le boîtier de filtre ouvrable (10, 11), l'élément filtrant (21) présentant un milieu filtrant (22) fermé de manière annulaire, lequel est relié sur la face frontale à un disque d'extrémité (23) supérieur et à un disque d'extrémité (24) inférieur, et une membrane anti-retour (27), la membrane anti-retour (27) étant disposée de telle manière qu'elle recouvre, dans le boîtier de filtre (10, 11), d'une part l'ouverture d'admission (16), la membrane anti-retour (27) étant pourvue d'un contour d'étanchéité (40) supplémentaire au moyen duquel le côté brut (32) peut être étanché du côté pur (33) dans le boîtier de filtre, la membrane anti-retour (27) étant pourvue d'une autre surface d'étanchéité (31) supplémentaire, **caractérisé en ce qu'**un épaulement (26) annulaire en saillie vers le bas et continu sur lequel est injectée la membrane anti-retour (27) est disposé sur le disque d'extrémité (23) inférieur, la surface d'étanchéité (31) supplémentaire étant exécutée sur une face frontale de l'épaulement (26) annulaire en tant que surface d'étanchéité axiale et surface annulaire permettant d'obturer l'ouverture d'écoulement (18), la surface d'étanchéité s'appuyant de manière étanche sur une surface d'étanchéité (20) du boîtier de filtre (10, 11), la section transversale de la surface d'étanchéité (31) supplémentaire exécutée en tant que surface d'étanchéité axiale étant supérieure à une section transversale de l'ouverture d'écoulement (18), l'ouverture de sortie (17) étant placée dans un dôme (38) en saillie vers le haut en sens axial, le dôme (38) comportant une surface (39), le contour d'étanchéité (40) supplémentaire étant formé par un bourrelet d'étanchéité (40) touchant le dôme (38) de manière étanche en sens radial et constituant la séparation entre le côté brut (32) et le côté pur (33), l'épaulement (26') annulaire comportant des interruptions (41) qui sont remplies de la matière de la membrane anti-retour (27').

2. Filtre à liquide selon la revendication 1, **caractérisé en ce que** l'ouverture d'écoulement (18) est positionnée à un point bas dans le boîtier de filtre (10, 11).

3. Filtre à liquide selon l'une des revendications précédentes, **caractérisé en ce que** le boîtier de filtre (10, 11) est doté d'un épaulement de contact (44) servant au positionnement axial de l'élément filtrant (21) dans le boîtier de filtre (10, 11).

4. Filtre à liquide selon l'une des revendications précédentes, **caractérisé en ce qu'**un élément de serrage (34) est prévu, au moyen duquel la surface d'étanchéité (31, 49) supplémentaire de la membrane anti-retour (27) peut être pressée sur l'ouverture d'écoulement (18).
